# EUROPÄISCHE PATENTANMELDUNG

(11) **EP 0 671 619 A1**
(43) Veröffentlichungstag der Anmeldung: **13.09.1995**
(21) Anmeldenummer: 95810041.4
(22) Anmeldetag: 23.01.1995
(51) Int. Cl.: G01M 15/00, G01L 23/10, F04B 51/00

(54) **Überwachungsanlage für Kolben-Motoren und -Kompressoren**

(30) Priorität: 10.02.1994 CH 390/94
(71) Anmelder: K.K. HOLDING AG, CH-8408 Winterthur (CH)
(72) Erfinder: Tolsma, Eduard, CH-8494 Bauma (CH); Meier, Walter, D-79801 Hohentengen (DE); Engeler, Paul, CH-8500 Frauenfeld (CH); Sonderegger, Christoph, CH-8413 Neftenbach (CH)

(57) **Zusammenfassung**

Die Erfindung betrifft eine Ueberwachungsanlage für Kolben-Motoren- und Kompressoren, insbesondere für schnell laufende Hochleistungs Diesel- und Gasmotoren. Sie ist gekennzeichnet durch auf jedem Zylinder angeordneten Dünnmessscheiben (4), die den Zylinderdruck indirekt messen und die so eingebaut sind, dass sie als feste Bestandteile zum Zylinderdeckel gehören. Je nach konstruktiven Gegebenheiten der Anlage und Querschwingungsverhalten der Zylinderdeckelbolzen (2) werden die Dünnmessscheiben (4) mit je einem Piezokristallsatz (5) oder mit zwei um 180° versetzten Piezokristallsätzen (5) versehen. Damit kann die Ueberwachungsanlage entweder den Spitzendruck, den Verbrennungsdruckanstieg α oder den Kompressionsdruck als Messsignal verfolgen. Kalibrierung erfolgt während Volllastprüflauf, indem alle Messsignale auf gleichen Maximalwert abgeglichen werden. Mit Hilfe eines analogen Rechners werden nun von allen Messzyklen laufend Mittelwerte gebildet, die kurzzeitig festgehalten und mit Einzelwerten verglichen werden. Sobald Einzelwerte ausserhalb der eingestellten Grenzwerte auftreten, sog. Ausreisser, werden diese erkannt und entsprechende Alarmstufen ausgelöst. Die erfindungsgemässe Ueberwachungsanlage ist modular anpassbar und für Dauerbetrieb geeignet, weil keine schwierig messbaren Gasdrücke erfasst werden müssen.

## Beschreibung

Die Erfindung betrifft eine Ueberwachungsanlage für Kolben-Motoren- und Kompressoren, insbesondere für schnell laufende Hochleistungs Diesel- und Gasmotoren. Sie ist gekennzeichnet durch Dünnmessscheiben, die den Zylinderdruck indirekt messen und die so eingebaut sind, dass sie als feste Bestandteile zum jeweiligen Motorteil gehören. Je nach konstruktiven Gegebenheiten der Anlage, insbesondere aber infolge des verschieden ausgeprägten Querschwingungsverhaltens der Zylinderdeckelbolzen entstehen überlagerte Störschwingungen, auf die Rücksicht genommen und deren Einwirkung vermieden werden muss. Entsprechend kann die Ueberwachungsanlage entweder den Spitzendruck, den Verbrennungsdruckanstieg α oder den Kompressionsdruck als Messsignal verfolgen. Kalibrierung erfolgt während Volllastprüflauf, indem alle Messsignale auf gleichen Maximalwert abgeglichen werden. Mit Hilfe eines analogen Rechners werden nun von allen Messzyklen laufend Mittelwerte gebildet, die kurzzeitig festgehalten und mit Einzelwerten verglichen werden. Sobald Einzelwerte ausserhalb der eingestellten Grenzwerte auftreten, sog. Ausreisser, werden diese erkannt und entsprechende Alarmstufen ausgelöst. Die erfindungsgemässe Ueberwachungsanlage ist modular anpassbar und für Dauerbetrieb geeignet, weil keine schwierig messbaren Gasdrücke erfasst werden müssen.

In zunehmendem Mass steht für die Ueberwachung solcher Anlagen kein qualifiziertes Personal mehr zur Verfügung, das eine gefährliche Veränderung des Betriebsgeschehens schnell genug feststellen und entsprechende Sofortmassnahmen einleiten kann.

Dadurch gehen infolge Unvorsichtigkeit und mangelhafter Wartung jährlich Millionenwerte verloren, die in vielen Fällen von Versicherungen gedeckt werden müssen.

Die Erfindung besticht durch ihre Einfachheit und Betriebssicherheit, hauptsächliche Anwendung wird sie in Diesel- und Gasmotoren, wie auch in Mehrzylinder Kolbenkompressoren für Gase oder Flüssigkeiten finden.

Anhand von Beispielen sollen die beiden Gruppen "Schiffsantriebe mit Mehrzylinder Dieselmotoren" sowie "Energieerzeugung mit Gasmotoren" näher dargestellt werden.

Schiffsantriebe z.B. für Fährbetrieb kennen praktisch nur drei Betriebszustände:
Leerlauf, Manövrierbetrieb, Vollast wobei der Vollastbetrieb etwa 90% der Gesamtbetriebszeit beträgt. Die Antriebsaggregate solcher Schiffe sind meistens schnelllaufende 8- bis 16-Zylinderdieselmotoren von niedrigem Leistungsgewicht. Solche Dieselmotoren sind im Gegensatz zu langsam laufenden Hochsee-Schiffsmotoren meist nicht mit Indizierventilen ausgerüstet, d.h. der Zylinderdruck kann im Betrieb nicht gemessen werden.

Eine ähnliche Situation besteht bei Gasmotoren, die mit Erd- oder Biogas betrieben werden. Diese Motoren werden meist zur Energieerzeugung in Verbundkraftwerken eingesetzt. Wegen der Gefährlichkeit von Gasexplosionen bei Defekten müssen solche Anlagen ganz besonders zuverlässig überwacht werden, woran wiederum die Versicherungen ein hohes Interesse haben. Solche Gasmotoren sind ohne Indizierventile ausgerüstet, der Verbrennungsdruck kann hier im Betrieb aus Sicherheitsgründen nicht gemessen werden.

Die einfachste und heute noch verwendete Messgrösse zur Ueberwachung ist die Abgastemperatur der einzelnen Zylinder, eine seit Jahrzehnten bekannte Methode. Vor allem bei Hochleistungsmotoren können jedoch Betriebszustände entstehen, z.B. durch Kolbenringbrüche cder Kolbenfresser, welche durch Aenderung der Abgastemperatur nicht schnell genug erkannt werden können. Eine Abschaltung erfolgt erst dann, wenn bereits erheblicher Schaden aufgetreten ist. Dies wäre besonders bei Gasmotoren äusserst gefährlich.

Eine sofort eingreifende Ueberwachung, die alle Betriebsunfälle in der notwendigen Reaktionszeit von Sekundenbruchteilen erkennt, kann nur mit Dauerüberwachung aller Zylinderdruckverläufe und mittels On-line Analyse der wichtigsten Messdaten erfolgen.

Die wichtigsten Werte des Verbrennungsablaufes im Zylinder sind:
- Kompressionsdruck
- Drucksteigerung α nach Verbrennungsbeginn
- Maximaldruck

Mit heutigen Prüfstandsmotoren ist es möglich, Ist- und Sollwerte solcher Messwerte exakt für jeden Verbrennungstakt in jedem Zylinder zu verfolgen und Abweichungen sofort anzuzeigen.

Dazu sind jedoch zuverlässige Sensoren für die Gasdruckerfassung im Zylinder notwendig die an komplexe Prüfstands-Computeranlagen angeschlossen werden.

Für Dauerbetrieb in der Praxis sind solche Methoden nicht anwendbar. Es braucht dazu wesentlich einfachere und zuverlässigere Systeme.

Kennzeichnend für die Erfindung ist die Wahl der Erfassung des Zylinderdruckes, der wie erwähnt, nicht an einem Indizierventil abgegriffen werden kann. Als Ersatz für diesen Hauptmesswert dient eine mechanische Grösse, die genau proportional der gasdynamischen Grösse des Zylinderdruckes ist. Diese mechanische Grösse kann eine Kraft sein, die mit weit grösserer Zuverlässigkeit erfasst werden kann, als eine gasdynamische Druckgrösse, die nur an schwer zugänglicher Stelle des Motors gemessen werden kann, wo zudem hohe Temperaturen herrschen.

Ohne grössere mechanische Veränderungen an wichtigen Motorteilen vornehmen zu müssen, kann die druckproportionale Kraft zuverlässig in den Zylinderdeckelbolzen gemessen werden.

Als zuverlässigstes Messprinzip für schnell varierende Kräfte bei sehr niedrigen Bauhöhen ist die Piezomesstechnik bekannt. Dazu werden auf Druck beanspruchte Piezokristalle an geeigneten Stellen der Sensoren eingebaut. Hierfür eignen sich Einkristalle wie z.B. Quarzkristall oder keramische Piezoscheiben. Es ist aber auch möglich, Miniaturkraftzellen auf Si-Basis oder in Dünnfilmtechnik oder in der kapazitiven Technik zu verwenden.

Ein weiterer und ausschlaggebender Teil der Erfindung liegt in der Kalibrier- und Auswertemethode der Sensoren und deren Signale.

Die erfindungsgemässe Kalibriermethode der Sensoren muss üblicherweise durchgeführt werden, ohne dass eine qualitative Messung des Gasdruckes z.B. in "bar" möglich ist. Zu diesem Zweck werden die Spitzenwertsignale der einzelnen Zylinder bei Volllastbetrieb durch elektrische Einstellglieder im zentralen Signalverarbeitungskasten auf einen einheitlichen Wert gebracht.

Die Erfindung wird in den folgenden Figuren näher beschrieben:
- Fig. 1: zeigt einen Teilquerschnitt eines Zylinderdeckels mit Zylinderdeckelbolzen, Dünnmessscheibe und Mutter.
- Fig. 2: zeigt den Grundriss von Fig. 1 mit zwei eingesetzten Piezokristallsätzen, die 180° versetzt sind.
- Fig. 3: zeigt eine Anordnung einer Dünnmessscheibe von Fig. 2, jedoch mit nur einem Piezokristallsatz.
- Fig. 4: zeigt das Druckdiagramm eines Diesel-bzw. Gasmotors.
- Fig. 5: zeigt schematisch eine erfindungsgemässe Ueberwachungsanlage.
- Fig. 6: zeigt ein Auswertebeispiel einer erfindungssemässen Ueberwachungsanlage.
- Fig. 7: zeigt ein Schaltschema einer erfindungsgemässen Anlage.
- Fig. 8: zeigt ein Beispiel der Auswerteschaltung.
- Fig. 9: zeigt eine hüllkurvenähnliche Zusammenfassung von Einzelsignalen.
- Fig. 10: zeigt ein elektronisches Funktionsschema einer erfindungsgemässen Anlage.

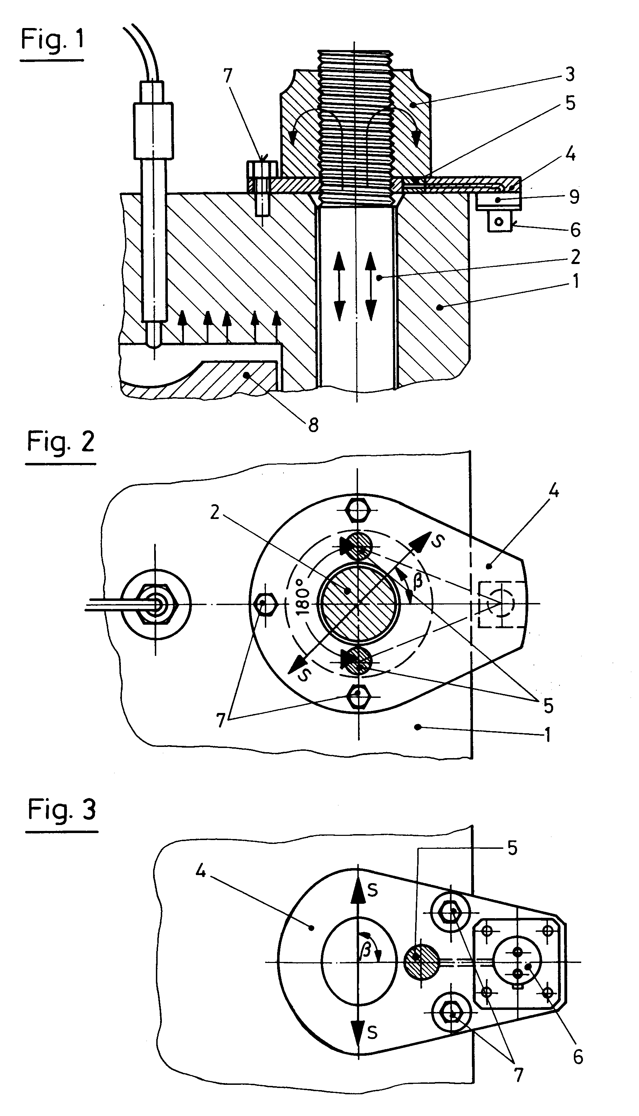

In Fig. 1 ist ein Teilquerschnitt eines Zylinderdeckels dargestellt. Dabei ist 1 der Zylinderdeckel, 2 der Zylinderdeckelbolzen, 3 die Mutter dazu. Es kann sich dabei um einen Diesel- oder Gasmotor oder Kolbenkompressor handeln. Zwischen Zylinderdeckel 1 und Mutter 3 ist die Dünnmessscheibe 4 mittels Befestigungsmitteln 7 fest montiert, so dass ihre Lage auch nach Lösen der Mutter und Demontage des Zylinderdeckels 1 erhalten bleibt. Damit ist die Repetierbarkeit des Messsignals auch nach Demontage und Neumontage des Zylinderdeckels gewährleistet.

Mindestens ein Piezokristallsatz 5 ist in der Dünnmessscheibe 4 dicht verschweisst untergebracht, deren Signal zum Steckergehäuse 9 geleitet ist, in welchem ein Impedanzwandler untergebracht sein kann und mit Stecker 6 verbunden ist.

Fig. 2 und Fig. 3 zeigen verschiedene Formen von Dünnmessscheiben, die den jeweiligen Platzverhältnissen auf dem Zylinderdeckel angepasst werden können entsprechend dem Querschwingungsverhalten des Zylinderdeckelbolzens 2.

Als Befestigungsmittel 7 können Schrauben oder Stifte oder andere Mittel verwendet werden. In Fig. 2 sind zwei Piezokristallsätze 5 je 180° versetzt angeordnet dargestellt. In Fig. 3 ist ein Piezokristallsatz 5 vorgesehen.

Je nach Querschwingungsverhalten der Zylinderdeckelbolzens 2 bzw. der Lage der Schwingungsebene S-S wo die max. Amplituden der Seitenschwingungen auftreten, (Saitenschwingung), kann die Lösung nach Fig. 2 oder 3 optimal sein. Mit nur einem Piezokristallsatz 5 muss die Dünnmessscheibe 4 so montiert sein, dass der Winkel β zur Hauptschwingungsachse S-S etwa 90° ist. Damit ergibt sich mit einem Piezokristallsatz geringste Störeinwirkung. Montagemässig anspruchsloser ist Anordnung von zwei piezokristallsätzen nach Fig. 2. Da sich deren Fehleramplituden kompensieren, ist die Montage dieser Dünnmessscheibe 4 unabhängig vom Winkel β zur Hauptschwingachse S-S. Dafür ist die Lösung aber aufwendiger.

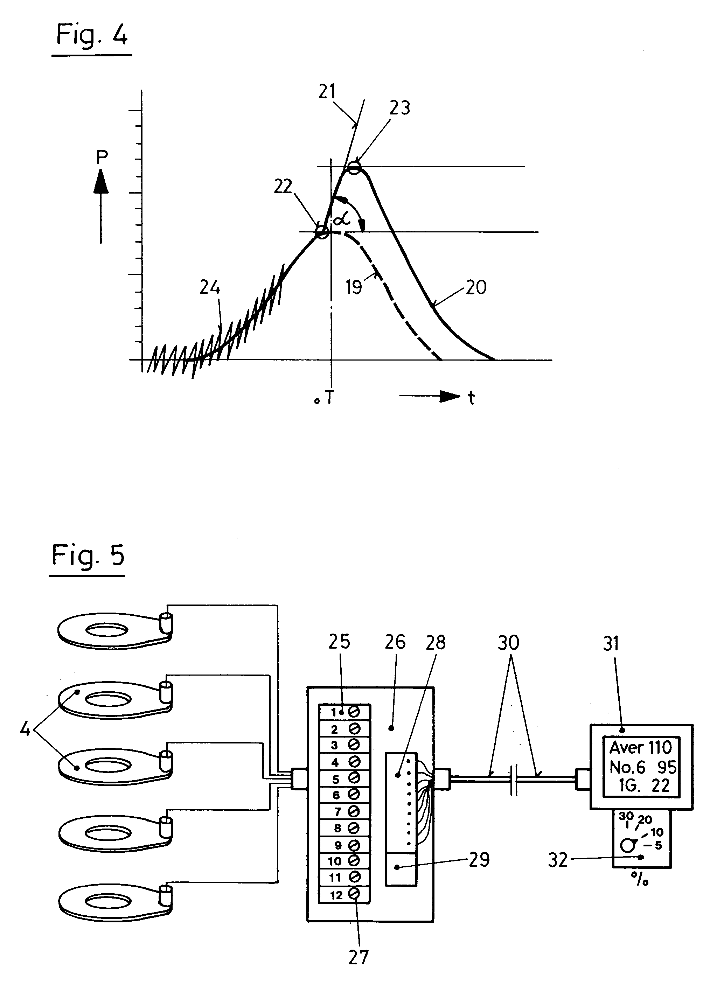

Fig. 4 zeigt ein dem Druckverlauf im Zylinder entsprechendes Messsignal. 19 ist der Kompressionsverlauf, 20 der Verbrennungsverlauf, 21 stellt die Drucksteigerung mit dem Gradienten α des Verbrennungsvorganges dar. In gewissen Motoren muss dieser Gradient α genau beobachtet und analysiert werden, was eine mögliche weitere Anwendung der Erfindung darstellen könnte, aber hier nur angedeutet bleibt. Eine weitere Messgrösse könnte der Kompressionsdruck 22 vor Verbrennungsbeginn sein. Ueblicherweise ist 23 der Spitzendruck, die weitaus wichtigste Messgrösse. 24 zeigt einen Abschnitt mit überlagerten max. Störschwingungen herrührend von der Querschwingung des betreffenden Zylinderdeckelbolzens 2 in der Schwingungsebene S-S, wenn der Winkel β = 0 ist. Für minimale Störung muss β∼90° sein.

Fig. 5 zeigt schematisch die erfindungsgemässe Ueberwachungsanlage.

Auf jedem Zylinder ist je eine Dünnmessscheibe 4 montiert, die über Leitungen mit dem Verstärkerkasten 26 verbunden sind. Dieser ist in Motornähe montiert. Der Verstärkerkasten 26 enthält die für jeden Zylinder vorgesehenen Signalverstärker 25, die mit Einstellelementen 27 versehen sind. Der Rechner bzw. die Folgeelektronik 28 bilden den Mittelwert der Hüllkurve, der entsprechend der Motorbelastung laufend ändert. Die Uebertragungsleitung 30 bringt die Signalauswertung auf die im Steuerraum untergebrachte Anzeigetafel 31, auf welcher auch die Schalter 32 für die Alarmgrenzen untergebracht sind.

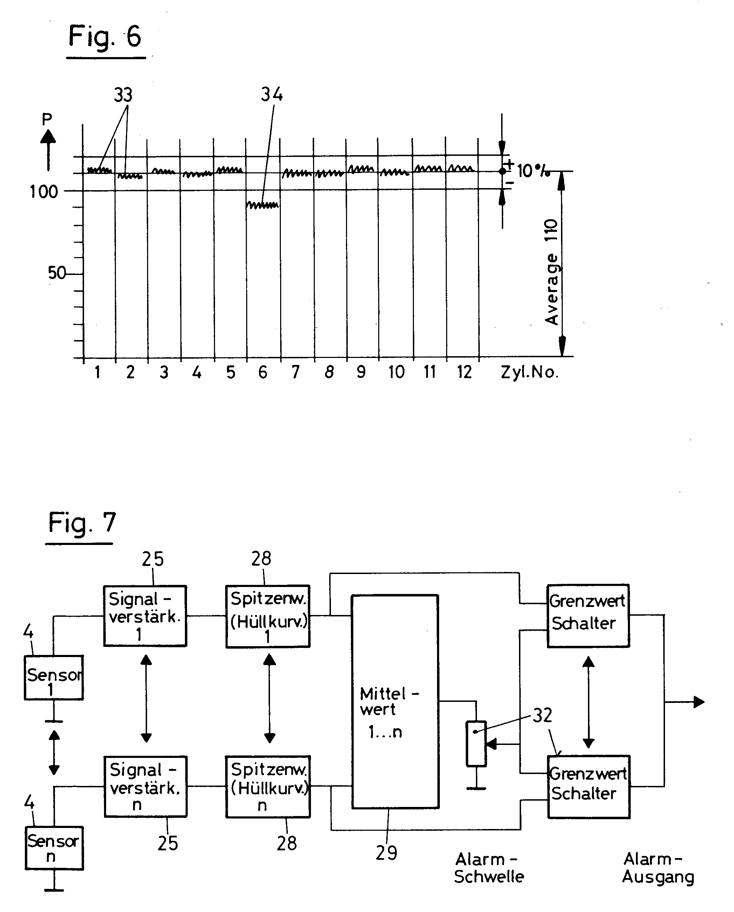

Fig. 6 zeigt ein Auswertebeispiel einer erfindungsgemässen Ueberwachungsanlage schematisch vereinfacht, wobei 33 die Spitzendruckfolgen von Zylinder 1 und 2 sind und 34 jene von Zylinder 6. Die Werte von 34 liegen unter dem gewählten Schwellenband von z.B. ±10%. Diese Werte müssen sofort von der Automatik entdeckt und angezeigt werden. Je nach Einstellung des Grenzwertschalters 32 wird die Anlage nach wenigen Fehlzyklen automatisch abgeschaltet oder auf eine niedrigere Betriebsstufe gebracht.

Fig. 7 zeigt etwas ausführlicher wie die Signalaufbereitung erfolgt.

Jeder Dünnmessscheibe 4 ist ein Signalverstärker 25 und eine Spitzenwertspeicherschaltung 28 zugeordnet. Im Mittelwertblock 29 werden die Signale der einzelnen Zylinder zusammengeschaltet und die Grenzwerte zugeordnet. Das aufgearbeitete Signal wird dann über die Leitung 30 zur Anzeigetafel 31 geführt.

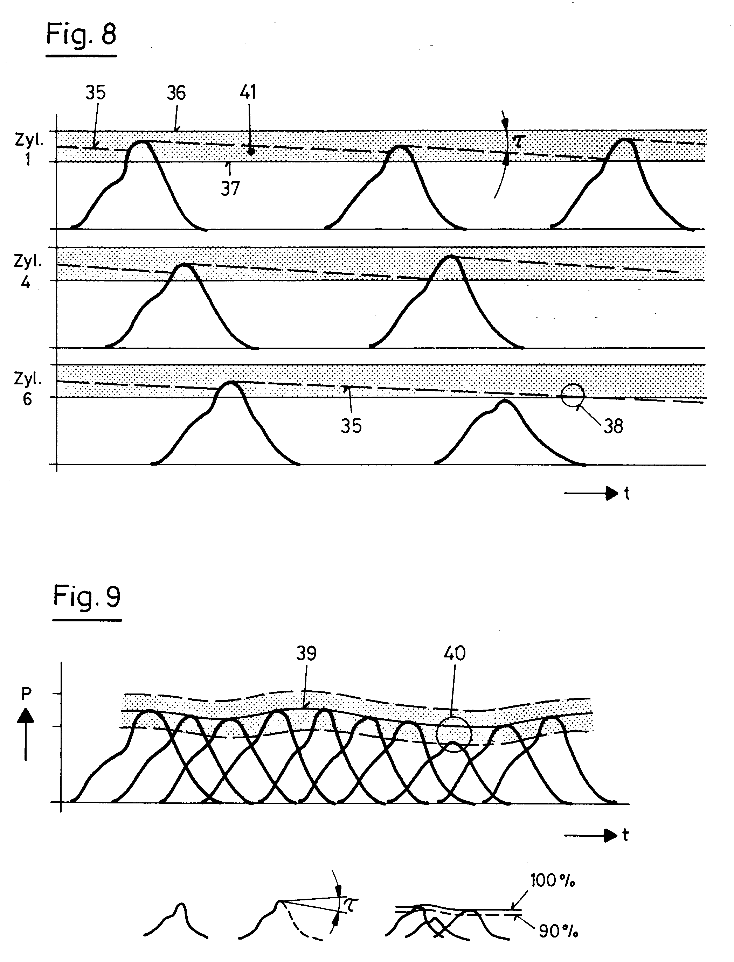

In Fig. 8 sind die im Rechner 28 bzw. Spitzenwertspeicherschaltung entstehenden Signale 35, die für jeden Zylinder separat verfolgt werden und die innerhalb gegebener Grenzwerte 36, 37 liegen, dargestellt. Sobald das Signal 35 einen Grenzwert z.B. 38 erreicht, wird ein Alarmsignal ausgelöst.

Fig. 9 zeigt die im Mittelwertblock 29 gebildete Hüllkurve 39 aller Mittelwerte 35. Ein unter den Grenzen der Hüllkurve 39 liegender Ausreisser 40 wird sofort erkannt.

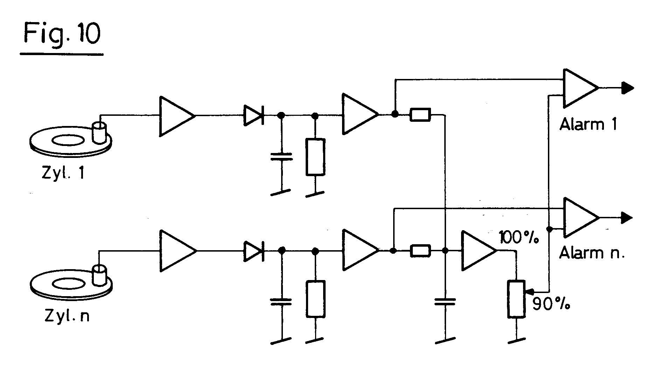

Fig. 10 zeigt die Schaltungsfunktion mit den elektrischen Symbolen, wie diese dem Fachmann verständlich sind. Das Signalverarbeitungsresultat ist über jeder Gruppe angegeben.

Durch die konsequente Anwendung an sich bekannter Mittel der analogen Rechentechnik ergibt sich ein erfindungsgemässes Ueberwachungssystem von aussergewöhnlicher Zuverlässigkeit und Einfachheit. Ohne die Notwendigkeit der absoluten Messung der Gasdrücke in den einzelnen Zylindern ist es möglich, mittels einer den thermischen und mechanischen Belastungen proportionalen Messgrösse eine Simultan-Ueberwachung der ganzen Anlage zu erreichen. Die dazu notwendige Dünnmessscheibe 4 kann auf einfache und zuverlässige Weise auf jedem Zylinder montiert werden, lediglich durch Auswechseln der Normunterlagscheibe.

Kalibrierung und Justierung der Messkanäle kann während eines Prüflaufes unter Vollast erfolgen, wobei alle Messsignale auf 100% gesetzt werden. Durch die kontinuierliche Erfassung aller Kennwerte und Bildung der Hüllkurve aller Mittelwerte ist der Gesamtmaschinenzustand laufend unter Kontrolle. Abweichungen einzelner Arbeitszyklen unter bzw.über die festgesetzten Grenzwerte werden sofort entdeckt und zur Anzeige gebracht. In einer zweiten Grenzwertstufe kann die Maschinenanlage automatisch sofort abgestellt werden.
Mit einer solchen Anlage ist die automatische Ueberwachung ohne eine komplexe Computeranlage möglich, wobei Betriebssicherheit erste Priorität erhält. Als Erweiterung des Erfindungsgedankens ist es aber auch möglich, die Signale der Ueberwachungsanlage in einen PC einzugeben und mit individuell angepasster Software weiter zu verarbeiten, insbesondere auch zur Maschinenbetriebs-Statistik zu verwenden. Auf diese Möglichkeiten soll hier nicht weiter eingegangen werden.

### Referenzliste

- 1: Zylinderdeckel
- 2: Zylinderdeckelbolzen
- 3: Schraubenmutter
- 4: Dünnmessscheibe
- 5: Piezokristallsatz
- 6: Anschlussteil
- 7: Befestigungsmittel
- 8: Kolben
- S-S: Schwingungsebene der Querschwingungen des Zylinderdeckelbolzens 2
- 19: Kompressionsverlauf
- 20: Verbrennungsverlauf
- 21: Drucksteigerung mit Gradient α
- 22: Kompressionsdruck
- 23: Spitzendruck
- 24: Ueberlagerte max. Störschwingungen
- 25: Signalverstärker
- 26: Verstärkerkasten
- 27: Einstellelement
- 28: Rechner / Spitzenwertspeicherschaltung
- 29: Mittelwertblock
- 30: Uebertragungsleitung
- 31: Anzeigetafel
- 32: Grenzwerteinsteller
- 33: Spitzendrücke Zylinder 1,2
- 34: Spitzendrücke Zylinder 6
- 35: Gespeichertes Spitzendrucksignal
- 36: Oberer Grenzwert
- 37: Unterer Grenzwert
- 38: Alarm-Auslösewert
- 39: Hüllkurve (Mittelwerte der Spitzenwerte)
- 40: Ausreisser
- τ: Speicherzeitkonstante
- 41: Mittelwert

## Patentansprüche

1. Ueberwachungsanlage für Kolben-Motoren und Kompressoren bestehend aus Sensoren, die den Zylinderdruckverläufen proportionale Messsignale ergeben und mit einer nachgeschalteten Verarbeitungselektronik verbunden sind, dadurch gekennzeichnet, dass jedem Zylinder eine Dünnmessscheibe (4) etwa gleicher Dicke wie die Normunterlagscheibe zugeordnet und durch Befestigungsmittel (7) mit dem Zylinderdeckel (1) verbunden ist und mindestens ein Messelement (5) enthält, das in Bezug auf die Hauptachse der Seitenschwingung S-S des Zylinderdeckelbolzens (2) so angeordnet ist, dass minimale Störsignale (24) aufgenommen werden.

2. Ueberwachungsanlage nach Anspruch 1, dadurch gekennzeichnet, dass jedem Zylinder eine Dünnmessscheibe (4) etwa gleicher Dicke wie die Normunterlagscheibe zugeordnet und durch Befestigungsmittel (7) mit dem Zylinderdeckel (1) verbunden ist und mind. ein Messelement (5) enthält, das in Bezug auf die Hauptachse der Seitenschwingung S-S des Zylinderdeckelbolzens (2) so angeordnet ist, dass minimale Störsignale (24) aufgenommen werden, was einen Winkel β von 90° erfordert.

3. Ueberwachungsanlage nach Anspruch 1, dadurch gekennzeichnet, dass jedem Zylinder eine Dünnmessscheibe (4) etwa gleicher Dicke wie die Normunterlagscheibe zugeordnet und durch Befestigungsmittel (7) mit dem Zylinderdeckel (1) verbunden ist und zwei Messelemente (5) enthält, die symmetrisch 180° gegenüberliegen und damit infolge Kompensation ebenfalls minimale Störsignale (24) durch Zylinderdeckelbolzen Schwingungen aufnehmen, unabhängig vom Montagewinkel β zur Hauptachse der Seitenschwingung S-S.

4. Ueberwachungsanlage nach einem der Ansprüche 1 oder 2, dadurch gekennzeichnet, dass die Dünnmessscheibe (4) einen über dem Aussenkreis der Mutter hinauskragenden Rand besitzt, der zur Montage von Befestigungsmitteln (7) geeignet ist.

5. Ueberwachungsanlage nach Anspruch 1, dadurch gekennzeichnet, dass die Verarbeitungselektronik die Mittelwerte (41) der Messsignale aller Zylinder dauernd verfolgt, kurzzeitig festhält und mit Einzelwerten so vergleicht, dass deren eingestellte Grenzwertüber- bzw. Unterschreitung sofort festgestellt und entsprechend der Alarmstufe in Befehlssignale umgewandelt wird.

6. Ueberwachungsanlage nach einem der Ansprüche 1 oder 2, dadurch gekennzeichnet, dass als Messsignal der Spitzenwert (23) des Kompressions- bzw. Verbrennungsdruckes gewählt ist.

7. Ueberwachungsanlage nach einem der Ansprüche 1 oder 2, dadurch gekennzeichnet, dass als Messsignal der Gradient α des Verbrennungsanstiegs gewählt ist.

8. Ueberwachungsanlage nach einem der Ansprüche 1 oder 2, dadurch gekennzeichnet, dass der Kompressionsenddruck (22) als Messsignal gewählt ist.

9. Ueberwachungsanlage nach einem der Ansprüche 1 bis 7, dadurch gekennzeichnet, dass die Signalverstärker (25) mit Einstellelementen (27) so ausgerüstet sind, dass bei Vollastprüflauf alle Einzelsignale auf einfache Weise auf einheitlichen Signalpegel gebracht werden können.

10. Ueberwachungsanlage nach einem der Ansprüche 1 bis 8, dadurch gekennzeichnet, dass eine Spitzenwert-Speicherschaltung (28) mit einer optimierten Speicherzeitkonstante (τ) so ausgerüstet ist, dass der Messwert bis zum nächsten Zyklus so gehalten wird, dass die Grenzwerte (36) und (37) unter nor malen Betriebsbedingungen nicht erreicht werden, sondern erst nach Auftreten eines Ausreissers (40), wodurch bei (38) ein Alarmsignal ausgelöst wird.

11. Ueberwachungsanlage nach einem der Ansprüche 1 bis 9, dadurch gekennzeichnet, dass die Mittelwerte (41) der gespeicherten Spitzendrücke eine Hüllkurve (39) über alle Messzyklen bilden, die zwischen zwei einstellbaren Grenzwerten liegt und dadurch bewirkt, dass Ausreisser (40) sofort erkannt und angezeigt werden bzw. Alarmsignale auslösen.

12. Ueberwachungsanlage nach einem der Ansprüche 1 bis 10, dadurch gekennzeichnet, dass die Piezokristallsätze (5) der Sensoren aus Quarzkristallen bzw. anderen Einkristallen bestehen.

13. Ueberwachungsanlage nach einem der Ansprüche 1 bis 11, dadurch gekennzeichnet, dass die Piezokristallsätze (5) der Sensoren aus Piezokeramik bestehen.

14. Ueberwachungsanlage nach einem der Ansprüche 1 bis 12, dadurch gekennzeichnet, dass die Piezokristallsätze aus Silizium aufgebaut sind und statt des piezoelektrischen Effektes die dem Messwert proportionale Aenderung des elektrischen Widerstandes oder der Kapazität zur Signalerfassung benützen.
